# EUROPÄISCHE PATENTSCHRIFT

(11) **EP 3 031 681 B1**
(45) Veröffentlichungstag und Bekanntmachung des Hinweises auf die Patenterteilung: **04.12.2019**
(21) Anmeldenummer: 15002830.6
(22) Anmeldetag: 05.10.2015
(51) Int. Cl.: B60T 13/66, B60T 13/68, B60R 16/02

(54) **VERFAHREN ZUM EINLEGEN EINER ELEKTRISCHEN FESTSTELLBREMSVORRICHTUNG**
METHOD FOR INSERTING AN ELECTRICAL PARKING BRAKE DEVICE
PROCEDE D'INSERTION D'UN DISPOSITIF DE FREIN DE STATIONNEMENT ELECTRIQUE

(30) Priorität: 10.12.2014 DE 102014018365
(43) Veröffentlichungstag der Anmeldung: 15.06.2016
(73) Patentinhaber: MAN Truck & Bus SE, 80995 München (DE)
(72) Erfinder: Azahaf, Hicham, 81541 München (DE)
(74) Vertreter: v. Bezold & Partner Patentanwälte - PartG mbB

(56) Entgegenhaltungen:
- EP-A1- 2 096 010
- EP-A1- 2 108 554
- EP-A1- 2 199 162
- EP-A1- 2 626 251
- EP-A2- 1 157 896
- DE-A1-102005 060 225
- DE-A1-102006 041 218
- DE-A1-102008 012 708
- JP-A- 2013 132 991

## Beschreibung

Die Erfindung betrifft ein Verfahren zum Einlegen einer elektrischen Feststellbremsvorrichtung eines Kraftfahrzeugs, insbesondere eines Nutzfahrzeugs, das mit einem handbetätigten Not-Aus-Betätigungselement und einer Trennvorrichtung zum Trennen eines oder mehrerer elektrischen Spannungsversorger vom Bordnetz infolge einer Betätigung des Not-Aus-Betätigungselements ausgestattet ist. Die Erfindung betrifft ferner eine Vorrichtung zur Steuerung einer elektrischen Feststellbremsvorrichtung und zur Steuerung einer Trennvorrichtung zum Trennen eines elektrischen Spannungsversorgers vom Bordnetz.

Nutzfahrzeugbremsanlagen umfassen ein Betriebsbremssystem und ein Parkbremssystem, die zumeist unabhängig voneinander pneumatisch oder elektropneumatisch gesteuert werden. Ein Parkbremssystem, nachfolgend auch als Parkbremse, Feststellbremsvorrichtung oder Feststellbremse bezeichnet, umfasst zumeist Federspeicherbremszylinder, die in ihrem entlüfteten Zustand das Fahrzeug bremsen, während die Parkbremse durch Belüften des Federspeicherbremszylinders gelöst werden kann.

Aus der Offenlegungsschrift EP 2 096 010 A1 ist ein Bremssystem für ein Flurförderzeug bekannt. Das Flurförderzeug umfasst eine elektrische Lenksteuerung. Bei einem Fehlersignal der Lenksteuerung wird die elektrische Verbindung zwischen Batterie und einer Notstopp-Bremse unterbrochen, um die Notstopp-Bremse durch von einem PWM-Steller getakteten Schalter in getakteter bzw. gedrosselter Weise zu entlüften, um ein abruptes Abbremsen zu verhindern. Aus der Offenlegungsschrift DE 10 2006 041 218 A1 ist ein Verfahren und eine Vorrichtung zum Betrieb eines Kraftfahrzeugs bekannt, wobei zur Durchführung eines Notbremsvorgangs Maßnahmen zur Reduzierung der Geschwindigkeit des Kraftfahrzeugs vorgesehen sind, wie beispielsweise eine Unterdrückung des Motormoments des Antriebsmotors oder Einlegen des Leerlaufs des Antriebsmotors. Die Offenlegungsschrift DE 10 2005 060 225 A1 offenbart eine elektropneumatische Bremssteuerungseinrichtung, die eine Ventilanordnung aufweist, die auch nach Auswahl der Stromversorgung im ungestromten Zustand betätigbar ist, um die Federspeicherbremszylinder der Bremssteuerungseinrichtung gedrosselt zu entlüften.

Nutzfahrzeuge können ferner mit einem handbetätigten Not-Aus-Betätigungselement, z. B. einem Not-Aus-Schalter, ausgestattet sein. Das handbetätigte Not-Aus-Betätigungselement ist typischerweise im Fahrerhaus angeordnet. Mit einem derartigen Not-Aus-Schalter wird ein Steuersignal für eine Batterie-Trennvorrichtung erzeugt, mit der jegliche Spannungsversorger, z. B. eine oder mehrere Batterien und Generatoren, z. B. im Gefahrenfall, vom angeschlossenen Bordnetz abgetrennt werden können .

Eine derartige, z. B. aus der DE 42 11 578 C1 bekannte, Trennvorrichtung, die auch als Batterietrennschalter bezeichnet wird, ist für Kraftfahrzeuge vorgeschrieben, die Gefahrgut, d h. insbesondere leicht entzündliche Medien wie beispielsweise Gas, Treibstoff, Lösungsmittel oder dergleichen, transportieren. Dabei soll ein derartiger Trennschalter gemäß der entsprechenden europäischen Bestimmung ADR (European agreement concerning the international carriage of dangerous goods by road) zwischen der Fahrzeugbatterie, dem Generator und dem Bordnetz des Fahrzeugs installiert sein.

Bei Fahrzeugen, die mit einer elektrisch angesteuerten Feststellbremse ausgestattet sind, tritt das Problem auf, dass nach Betätigung des Not-Aus-Trennschalters das Betätigen der elektrischen Feststellbremse nicht mehr bzw. nur innerhalb einer kurzen Nachlaufzeit des Batterietrennschalters, auch als Verzögerungszeit bezeichnet, möglich ist, da kein elektrisches Ansteuersignal mehr übertragen werden kann. Die aus der Praxis bekannten Not-Aus-Systeme sind aktuell so ausgeführt, dass nach einer vorgegebenen Nachlaufzeit, welche auch gesetzlichen Regelungen unterliegt und für die auch z. B. durch die vorgenannte ADR-Bestimmung ein gültiger Zeitbereich vorgegebenen ist, alle elektrischen Systeme stromlos geschaltet werden.

Aufgrund gesetzlicher Anforderungen muss der Fahrer das Fahrzeug jedoch mittels der Feststellbremse gegen Wegrollen sichern und sicher abstellen können. Aus diesem Grunde könnte somit in Betracht gezogen werden, das Einlegen der Feststellbremse unmittelbar an die Betätigung des Not-Aus-Trennschalters zu koppeln. Es ist jedoch aus der Praxis bekannt, dass der Not-Aus-Trennschalter in Notsituationen auch während der Fahrt bzw. beim Ausrollen des Fahrzeugs betätigt wird. Diese Fälle sind aus Fahrsicherheitsgesichtspunkten besonders kritisch, da bei Betätigung während der Fahrt sämtliche elektronische Systeme inkl. der Sicherheitssysteme wie beispielsweise ABS nicht mehr verfügbar sind. Aus diesem Grunde stellt ein direktes vollständiges Einlegen der Feststellbremse unmittelbar mit der Betätigung des Not-Aus-Trennschalters ein Sicherheitsrisiko dar, insbesondere weil in diesem Fall bei noch fahrendem Fahrzeug dann eine Vollbremsung mit der Feststellbremse ohne Blockierverhinderer erfolgen würde.

Es ist somit eine Aufgabe der Erfindung, ein Verfahren zum Einlegen einer elektrischen Feststellbremsvorrichtung eines Kraftfahrzeugs, insbesondere eines Nutzfahrzeugs, das mit einem handbetätigten Not-Aus-Betätigungselement und einer Trennvorrichtung zum Trennen eines elektrischen Spannungsversorgers vom Bordnetz infolge einer Betätigung des Not-Aus-Betätigungselements ausgestattet ist, bereitzustellen, mit dem Nachteile herkömmlicher Techniken vermieden werden können.

Der Erfindung liegt insbesondere die Aufgabe zugrunde, ein Verfahren zum Einlegen einer elektrischen Feststellbremsvorrichtung bereitzustellen, mit dem auch nach Betätigung eines Not-Aus-Betätigungselements während der Fahrt ein sicheres Einlegen der Feststellbremse ermöglicht wird, damit das Fahrzeug bzw. die Zugkombination sicher abgestellt und sicher im Stillstand gehalten werden kann. Eine weitere Aufgabe ist es, eine Vorrichtung zur Steuerung einer elektrischen Feststellbremsvorrichtung bereitzustellen, mit der Nachteile herkömmlicher Vorrichtungen vermieden werden können.

Diese Aufgaben werden durch ein Verfahren mit den Merkmalen des Hauptanspruchs und durch eine Vorrichtung mit den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zum Einlegen einer elektrischen Feststellbremsvorrichtung eines Kraftfahrzeugs, insbesondere eines Nutzfahrzeugs, vorgeschlagen, wobei das Fahrzeug ein handbetätigtes Not-Aus-Betätigungselement und eine Trennvorrichtung zum Trennen wenigstens eines, vorzugsweise jeglicher elektrischen Spannungsversorger vom Bordnetz infolge einer Betätigung des Not-Aus-Betätigungselements aufweist.

Gemäß allgemeinen Gesichtspunkten der Erfindung ist das Verfahren zum Einlegen der elektrischen Feststellbremsvorrichtung so ausgeführt, dass ein Einlegen, vorzugsweise ein unverzögertes Einlegen, der elektrischen Feststellbremse eingeleitet wird bzw. erfolgt, nachdem ein Not-Aus-Betätigungselement betätigt wurde und eine Geschwindigkeit des Kraftfahrzeugs bei Betätigung des Not-Aus-Betätigungselements nicht größer als ein vorbestimmter erster Schwellenwert v1 ist. Ferner wird in diesem Fall eine Verzögerungszeit, d. h. die Nachlaufzeit der Trennvorrichtung, auf einen vorgegebenen ersten Wert festgelegt.

Der erste Schwellenwert v1 ist hierbei vorzugsweise auf einen Geschwindigkeitswert festgelegt, bei dem oder bis zu dem ein Einlegen der Feststellbremse nicht sicherheitskritisch ist, da in diesem Fall bei noch fahrendem Fahrzeug eine Vollbremsung mit der Feststellbremse ohne Blockierverhinderer erfolgen würde. Ein geeigneter Schwellenwert v1 kann abhängig von dem spezifischen Bremsverhalten der Feststellbremse des Kraftfahrzeugs z. B. experimentell in Fahrversuchen ermittelt und festgelegt werden. Gemäß einem weiteren Aspekt der Erfindung kann der erste Schwellenwert v1 auf einen Wert aus dem Bereich von 0 km/h bis 10 km/h, weiter vorzugsweise auf einen Wert aus dem Bereich von 0 km/h bis 7 km/h festgelegt sein.

Gemäß allgemeinen Gesichtspunkten der Erfindung ist das Verfahren zum Einlegen der elektrischen Feststellbremsvorrichtung ferner so ausgeführt, dass, wenn die Geschwindigkeit des Kraftfahrzeugs bei Betätigung des Not-Aus-Betätigungselements größer als der vorbestimmte erste Schwellenwert v1 ist, dann ein Einstellen der Verzögerungszeit der Trennvorrichtung auf einen zweiten Wert erfolgt, der größer als der erste Wert ist. Ferner wird in diesem Fall eine Bremsanforderung an die elektrische Betriebsbremse übermittelt, vorzugsweise so lange, bis eine Geschwindigkeit des Fahrzeugs kleiner gleich einem vorbestimmten zweiten Schwellenwert ist. Falls die Geschwindigkeit des Kraftfahrzeugs kleiner gleich einem vorbestimmten zweiten Schwellenwert ist, erfolgt dann das Einlegen der elektrischen Feststellbremse.

Mit anderen Worten wird somit nach dem erfindungsgemäßen Verfahren nach einer Betätigung des Not-Aus-Betätigungselements der Zeitpunkt des Einlegens der Feststellbremse automatisch in Abhängigkeit vom Fahrzustand des Fahrzeugs gewählt. Befindet sich das Fahrzeug bei Betätigung des Not-Aus-Betätigungselements im Stillstand oder bewegt sich mit einer langsamen Geschwindigkeit, die kleiner v1 ist, dann wird die Feststellbremse automatisch und schnellstmöglich eingelegt und die Spannungsversorger nach einer kleinen Verzögerungszeit stromlos geschaltet. Fährt das Fahrzeug bei Betätigung des Not-Aus-Betätigungselements jedoch noch schneller als v1, dann wird automatisch eine Bremsung mit der Betriebsbremse eingeleitet, so lange, bis das Fahrzeug steht oder zumindest eine Geschwindigkeit erreicht hat, bei der die Feststellbremse sicher eingelegt werden kann, was ebenfalls dann ohne weiteres Zutun des Fahrers erfolgt. Gleichzeitig wird ohne Zutun des Fahrers die Verzögerungszeit der Feststellbremse hoch gesetzt, damit mehr Zeit bleibt, um die elektrische Betriebsbremse und anschließend noch die Parkbremse elektrisch anzusteuern.

Ein besonderer Vorzug der Erfindung liegt somit darin, dass sich ein automatischer Park-Modus bei Betätigung des Not-Aus-Betätigungselements einstellt, der auch während der Fahrt ein sicheres Einlegen der Feststellbremse ermöglicht, damit das Fahrzeug bzw. die Zugkombination sicher abgestellt und sicher im Stillstand gehalten werden kann - unabhängig davon, ob der Fahrer aus Panikreaktion das Fahrzeug frühzeitig verlässt oder vergisst, die Feststellbremse einzulegen. Ein weiterer Vorteil ist, dass das Verfahren durch eine entsprechend angepasste Ansteuerung bestehender Komponenten umgesetzt werden kann und somit keine zusätzlichen kostenaufwändigen, z. B. rein pneumatischen, Back-up-Lösungen erforderlich sind, um nach Wegfall der Stromversorgung die Feststellbremse z. B. mechanisch einlegen zu können.

Vorstehend wurde bereits erwähnt, dass die aus der Praxis bekannten Batterietrennschalter aufgrund gesetzlicher Bestimmungen so ausgeführt sind, dass nach der vorgegebenen Nachlaufzeit (Verzögerungszeit) alle elektrischen Systeme stromlos geschaltet werden. Die Verzögerungszeit ermöglicht beispielsweise, Daten von Steuergeräten noch vor Abschaltung der Stromversorgung abzuspeichern. Gängige Batterietrennschalter weisen einen entsprechenden Steuereingang auf, über den die Nachlaufzeit innerhalb vorgegebener Grenzen, in der Regel auf einen festen Wert eingestellt ist. Ein weiterer Aspekt der Erfindung ist, dass die Nachlaufzeit zwischen einem Minimalwert T_{Min} von ca. 1 Sekunde bis zu einem Maximalwert T_{Max} von knapp unter 10 Sekunden, je nach Fahrzeugzustand im Betrieb variiert werden kann.

Gemäß einer bevorzugten Ausgestaltungsform entspricht der erste Wert der Verzögerungszeit einer minimal einstellbaren Verzögerungszeit T_{Min} der Trennvorrichtung. Es ist weiter vorteilhaft, den zweiten Wert der Verzögerungszeit so festzulegen, dass dieser einer maximal einstellbaren Verzögerungszeit T_{Max} der Trennvorrichtung entspricht. Dadurch wird einerseits in dem Fall, in dem sich das Fahrzeug bei Betätigung des Not-Aus-Betätigungselements im Stillstand befindet oder sich mit einer Geschwindigkeit bewegt, die kleiner v1 ist, sichergestellt, dass die Spannungsversorger möglichst schnell abgeschaltet werden. Andererseits wird in dem Fall, in dem sich das Fahrzeug bei Betätigung des Not-Aus-Betätigungselements mit einer Geschwindigkeit größer als v1 bewegt, das Abschalten der Spannungsversorger innerhalb der gesetzlich vorgeschriebenen Grenzen möglichst lange verzögert, um ausreichend Zeit zu haben, das Fahrzeug mit der elektrisch angesteuerten Betriebsbremse abzubremsen.

Der zweite Schwellenwert kann ebenfalls auf einen Geschwindigkeitswert festgelegt werden, bei dem ein Einlegen der Feststellbremse nicht sicherheitskritisch ist. Eine weitere vorteilhafte Ausgestaltungsform sieht vor, dass der zweite Schwellenwert auf den gleichen Wert wie der erste Schwellenwert v1 festgelegt ist.

Es ist weiterhin vorteilhaft, die an die Betriebsbremse übermittelte Bremsanforderung im Falle der Betätigung des Not-Aus-Betätigungselements bei einer Fahrzeuggeschwindigkeit v > v1 so festzulegen, dass die Bremsanforderung einen Wert von 4 m/s^2 nicht überschreitet, d. h. dass die Bremsanforderung einer Bremsbeschleunigung von höchstens 4 m/s^2 entspricht. Dadurch wird ein zu abruptes Abbremsen und somit eine Gefahr für den nachfolgenden Verkehr vermieden.

Ein weiterer Aspekt der Erfindung betrifft eine Vorrichtung zur Steuerung einer elektrischen Feststellbremsvorrichtung und zur Steuerung der Trennvorrichtung zum Trennen wenigstens eines, vorzugsweise jeglicher elektrischen Spannungsversorger vom Bordnetz infolge einer Betätigung des handbetätigten Not-Aus-Betätigungselements des Kraftfahrzeugs, insbesondere eines Nutzfahrzeugs.

Die Vorrichtung ist eingerichtet, das Verfahren zum Einlegen der Feststellbremse, wie hierin offenbart, durchzuführen. Die Vorrichtung ist insbesondere eingerichtet, ein Betätigungssignal des handbetätigten Not-Aus-Betätigungselements zu empfangen und/oder zu erfassen und ein zweites Signal zu empfangen, aus dem die Fahrzeuggeschwindigkeit oder ein Bewegungszustand des Kraftfahrzeugs ableitbar ist. Die Vorrichtung ist insbesondere ferner eingerichtet, in Abhängigkeit von dem Betätigungssignal eine Betätigung des Not-Aus-Betätigungselements zu erkennen und bei einer erkannten Betätigung des Not-Aus-Betätigungselements in Abhängigkeit von dem zweiten Signal zu prüfen, ob eine Fahrzeuggeschwindigkeit des Kraftfahrzeugs nicht größer als der vorbestimmte erste Schwellenwert v1 ist.

Falls die Fahrzeuggeschwindigkeit des Kraftfahrzeugs nicht größer als der vorbestimmte erste Schwellenwert v1 ist, gibt die Steuereinrichtung ein Steuersignal zum Einlegen der Feststellbremsvorrichtung aus und stellt beispielsweise durch Ausgabe eines entsprechenden Steuersignals eine Verzögerungszeit der Trennvorrichtung auf einen ersten Wert, z. B. auf den Minimalwert T_{Min}, ein.

Falls die Fahrzeuggeschwindigkeit des Kraftfahrzeugs bei Betätigung des Not-Aus-Betätigungselements jedoch größer als der vorbestimmte Schwellenwert v1 ist, stellt die Vorrichtung die Verzögerungszeit der Trennvorrichtung auf einen zweiten Wert, der größer als der erste Wert ist, ein, z. B. auf den Maximalwert T_{Max}, und fordert durch Ausgabe einer entsprechenden externen Bremsanforderung (engl. *External Break Request (XBR)*) die elektrische Betriebsbremse des Fahrzeugs an. Ferner ist die Vorrichtung eingerichtet, ein Steuersignal zum Einlegen der Feststellbremsvorrichtung auszugeben, sobald eine Geschwindigkeit des Fahrzeugs kleiner gleich dem vorbestimmten zweiten Schwellenwert ist.

Zur Vermeidung von Wiederholungen sollen rein verfahrensgemäß offenbarte Merkmale auch als verfahrensgemäß offenbart gelten und beanspruchbar sein. Die vorgenannten Aspekte und erfindungsgemäßen Merkmale, insbesondere im Hinblick auf den ersten und zweiten Schwellenwert, die Verzögerungszeit und die Höhe der Bremsanforderung gelten somit auch für die Vorrichtung.

Eine Möglichkeit der erfindungsgemäßen Realisierung sieht vor, dass die Vorrichtung eine in das handbetätigte Not-Aus-Betätigungselement integrierte Steuerung ist. Das handbetätigte Not-Aus-Betätigungselement ist somit als "intelligenter" Not-Aus-Schalter ausgeführt.

Eine alternative Möglichkeit der erfindungsgemäßen Realisierung sieht vor, dass die Vorrichtung eine in die Trennvorrichtung integrierte Steuerung ist.

Ein weiterer Aspekt der Erfindung betrifft ein Nutzfahrzeug, umfassend eine Vorrichtung wie vorstehend offenbart, eine elektrische Feststellbremseinrichtung, eine elektrische Betriebsbremse, ein handbetätigtes Not-Aus-Betätigungselement, das vorzugsweise im Fahrerhaus angeordnet ist, und eine Trennvorrichtung zum Trennen eines elektrischen Spannungsversorgers vom Bordnetz infolge einer Betätigung des handbetätigten Not-Aus-Betätigungselements. Die elektrische Feststellbremseinrichtung kann wenigstens einen Federspeicherbremszylinder und eine elektropneumatisch steuerbare Feststellbremsventilanordnung umfassen, über die der wenigstens eine Federspeicherbremszylinder belüftbar und entlüftbar ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Fahrzeugdatenverbunds gemäß einer Ausführungsform der Erfindung;
- Figur 2: ein Ablaufdiagramm zur Illustration des Verfahrens zum Einlegen der Feststellbremse gemäß einer Ausführungsform der Erfindung; und
- Figur 3: eine schematische Darstellung eines Fahrzeugdatenverbunds gemäß einer weiteren Ausführungsform der Erfindung.

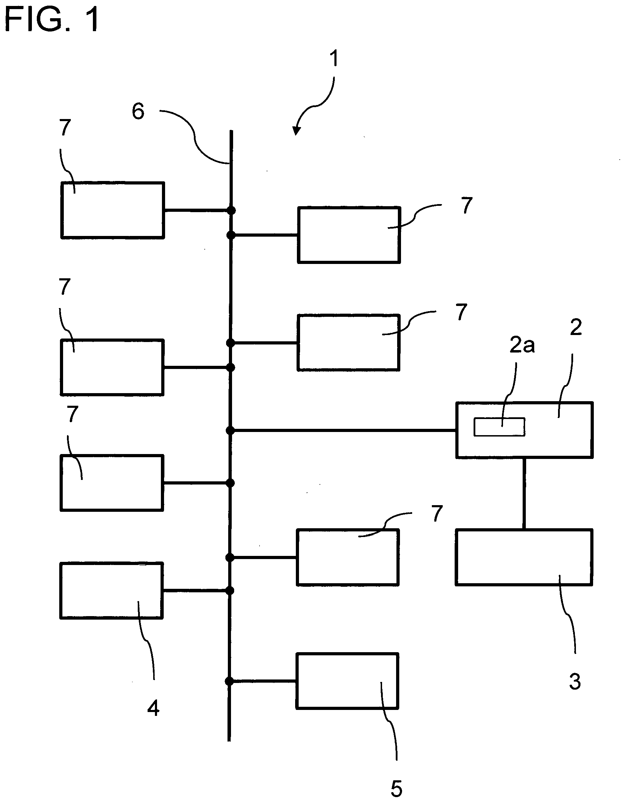

Figur 1 zeigt schematisch mit einem Blockschaltbild einen Fahrzeugdatenverbund 1 eines Nutzfahrzeugs, mit einem Triebstrang-CAN-Datenbus 6, an dem in an sich bekannter Weise ein Steuergerät 4 einer elektropneumatisch ansteuerbaren Parkbremse (elektrische Feststellbremse), ein Steuergerät 5 des elektronischen Betriebsbremssystems sowie weitere mit dem CAN-Datenbus 6 verbundene Komponenten 7 angeschlossen sind. Die Verbindung der Komponenten 2, 4, 5 und 7 mit dem CAN-Datenbus sind durch die durchgezogenen Verbindungslinien schematisch dargestellt.

Ferner ist ein handbetätigter Not-Aus-Schalter 2 vorgesehen, der im Fahrerhaus installiert ist. Der Not-Aus-Schalter 2 ist ferner über eine Signalleitung mit einem Batterietrennschalter 3 verbunden. Die Signalleitung ist durch die durchgezogene Verbindungslinie zwischen 2 und 3 dargestellt. Der Batterietrennschalter 3 ist eingerichtet, nach Empfang einer entsprechenden Anforderung vom Not-Aus-Schalter 2 nach einer einstellbaren Nachlaufzeit die gesamte Stromversorgung aller Steuergeräte zu trennen, d. h. alle Spannungsquellen wie eine Batterie und einen Generator zu isolieren, d. h. vom Bordnetz zu trennen.

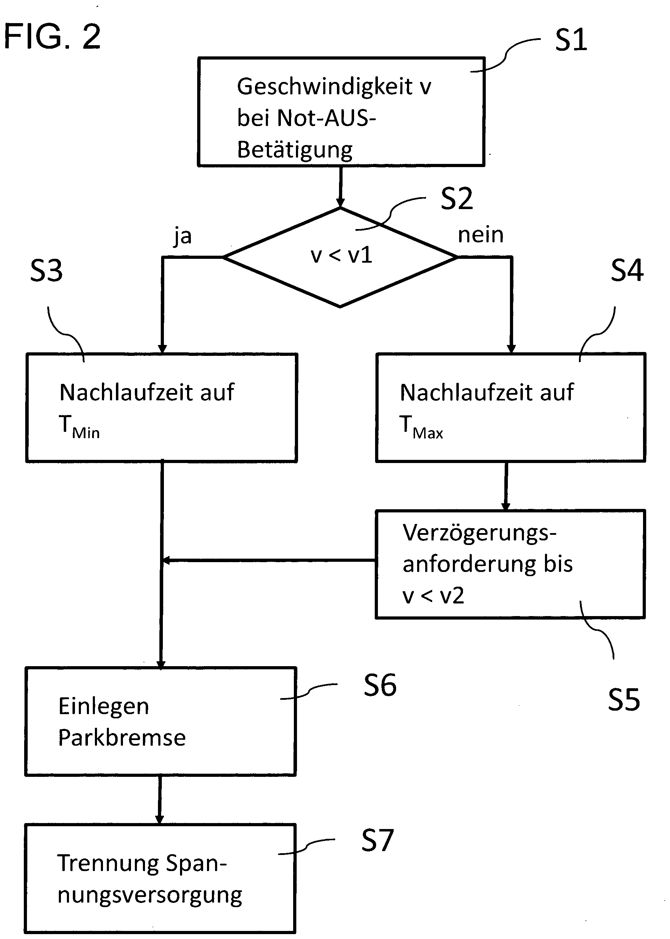

Eine Besonderheit dieser Ausführungsvariante liegt darin, dass die Not-Aus-Betätigung 2 im Fahrerhaus CAN-fähig ausgeführt ist, d. h. die Not-Aus-Betätigung 2 ist ebenfalls am CAN-Datenbus 6 angeschlossen. Die Not-Aus-Betätigung 2 umfasst ferner eine Steuerung 2a zur Steuerung der Parkbremse 4 und zur Steuerung des Batterietrennschalters 3, um bei Betätigung der Not-Aus-Betätigung 2 durch den Fahrer automatisch das Einlegen der Parkbremse 4 zu veranlassen. Das hierbei ausgeführte Verfahren zum Einlegen der Parkbremse 4 wird nachfolgend unter Bezugnahme auf Figur 2 beschrieben.

Erkennt die Steuerung 2a eine Betätigung der Not-Aus-Betätigung, wird die Geschwindigkeit v des Fahrzeugs über den CAN-Datenbus 6 abgefragt (Schritt S1). Die Fahrzeuggeschwindigkeit wird über die Raddrehzahlsensoren, welche Bestandteil des elektronischen Bremssystems (EBS) 5 sind, ermittelt. Alternativ kann die Fahrzeuggeschwindigkeit auch über die Geschwindigkeitserfassung der Antriebswelle ermittelt werden. Hierbei wird die Fahrzeuggeschwindigkeit über das Steuergerät des Getriebes (nicht dargestellt) über den CAN-Datenbus 6 bereitgestellt.

Ist das Ergebnis der Abfrage v ≤ v1, d. h., die Fahrzeuggeschwindigkeit v ist kleiner gleich dem Schwellenwert v1, dann wird von der Steuerung 2a ein Signal ausgegeben, welches die Parkbremse einlegt (Schritt S6) und die Nachlaufzeit des Batterietrennschalters 3, d. h. die Nachlaufzeit bis zur Trennung der Spannungsversorgung, auf die minimal mögliche Nachlaufzeit T_{Min} eingestellt (Schritt S3). Das Signal zum Einlegen der Parkbremse 4 wird von dem elektropneumatischen Steuergerät 4 über den CAN-Datenbus 6 empfangen, welches daraufhin eine Entlüftung der Federspeicherbremszylinder der Parkbremse einleitet. Der Schwellenwert v1 ist dabei auf einen Geschwindigkeitswert festgelegt, bei dem ein Einlegen der Feststellbremse nicht sicherheitskritisch ist, z. B. auf einen Wert von 7 km/h. Nach Ablauf von T_{Min} trennt der Batterietrennschalter 3 dann alle Spannungsversorger vom Bordnetz (Schritt S7).

Ist das Ergebnis in Schritt S2 jedoch v > v1, d. h., die Fahrzeuggeschwindigkeit ist größer als ein vorbestimmter Schwellenwert v1, dann wird die Betriebsbremse 5 über eine externe Bremsanforderung (XBR) solange angefordert, bis die Fahrzeuggeschwindigkeit nicht mehr größer als ein vorgegebener Geschwindigkeitsschwellenwert v2 ist, bei dem ein Einlegen der Feststellbremse nicht mehr sicherheitskritisch ist (Schritt S5). Vorliegend ist der Geschwindigkeitsschwellenwert v2 gleich dem Geschwindigkeitsschwellenwert v1 gewählt. Ferner wird in Schritt S4 die Nachlaufzeit (Verzögerungszeit) bis zur Trennung der Spannungsversorgung auf die maximal zulässige Nachlaufzeit T_{Max} eingestellt. Hierzu übermittelt die Steuerung 2a ein entsprechendes Steuersignal an den Batterietrennschalter 3. Wenn die Fahrzeuggeschwindigkeit dann unter v1 gefallen ist, wird von der Steuerung 2a das Signal zum Einlegen der Parkbremse auf den CAN-Datenbus 6 ausgegeben (Schritt S6), um die Parkbremse einzulegen.

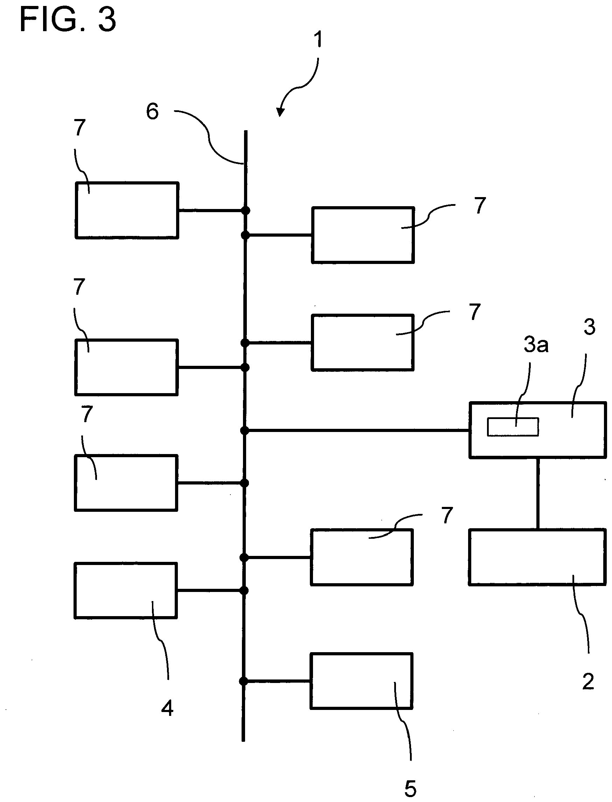

Figur 3 zeigt eine alternative Ausführungsform der Erfindung. Der Fahrzeugdatenverbund 1 eines Nutzfahrzeugs weist einen Triebstrang-CAN-Datenbus 6 auf, an dem wiederum ein Steuergerät 4 einer elektropneumatisch ansteuerbaren Parkbremse (elektrische Feststellbremse), ein Steuergerät 5 des elektronischen Betriebsbremssystems sowie weitere an den CAN-Datenbus 6 angeschlossene Komponenten 7 angeschlossen sind. Die Besonderheit dieser Ausführungsform im Vergleich zu der in Figur 1 dargestellten Variante liegt darin, dass die Not-Aus-Betätigung 2 im Fahrerhaus nun an einen CAN-fähigen Batterietrennschalter 3 angebunden ist, welcher am CAN-Datenbus 6 angeschlossen ist. Dieser enthält nun eine Steuerung 3a, die entsprechend programmtechnisch eingerichtet ist, das Verfahren gemäß Figur 2 auszuführen und hierzu über den CAN-Datenbus 6 entsprechende Steuersignale an das Steuergerät 4 der Parkbremse und das Steuergerät 5 der Betriebsbremse auszugeben.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Fahrzeugdatenverbund
- 2: Handbetätigtes Not-Aus-Betätigungselement
- 2a: Steuerung
- 3: Batterietrennschalter
- 3a: Steuerung
- 4: Elektrische Fellstellbremse bzw. Steuergerät einer elektrischen Feststellbremse
- 5: Elektrische Betriebsbremse bzw. Steuergerät einer elektrischen Betriebsbremse
- 6: Triebstrang-CAN-Datenbus
- 7: Am Triebstrang-CAN-Datenbus angeschlossene Komponente
- v: Fahrzeuggeschwindigkeit
- v1: Schwellenwert

## Patentansprüche

1. Verfahren zum Einlegen einer elektrischen Feststellbremsvorrichtung (4) eines Kraftfahrzeugs, insbesondere eines Nutzfahrzeugs, mit einem handbetätigten Not-Aus-Betätigungselement (2) und einer Trennvorrichtung (3) zum Trennen eines elektrischen Spannungsversorgers vom Bordnetz infolge einer Betätigung des Not-Aus-Betätigungselements (2), umfassend die Schritte:
(a) wenn eine Geschwindigkeit des Kraftfahrzeugs bei Betätigung des Not-Aus-Betätigungselements nicht größer als ein vorbestimmter erster Schwellenwert (v1) ist, dann:
(a1) Einlegen der elektrischen Feststellbremse (4) und
(a2) Einstellen einer Verzögerungszeit der Trennvorrichtung auf einen ersten Wert; und
(b) wenn die Geschwindigkeit des Kraftfahrzeugs bei Betätigung des Not-Aus-Betätigungselements (2) größer als der vorbestimmte erste Schwellenwert (v1) ist, dann:
(b1) Einstellen der Verzögerungszeit der Trennvorrichtung (3) auf einen zweiten Wert, der größer als der erste Wert ist,
(b2) Übermittlung einer Bremsanforderung an die elektrische Betriebsbremse (5) und
(b3) Einlegen der elektrischen Feststellbremse (4), sobald eine Geschwindigkeit des Kraftfahrzeugs kleiner gleich einem vorbestimmten zweiten Schwellenwert ist.

2. Verfahren nach Anspruch 1, **dadurch gekennzeichnet,**
**dass** der erste Wert der Verzögerungszeit einer minimal einstellbaren Verzögerungszeit (T_{Min}) der Trennvorrichtung (3) entspricht und/oder dass der zweite Wert der Verzögerungszeit einer maximal einstellbaren Verzögerungszeit (T_{Max}) der Trennvorrichtung (3) entspricht.

3. Verfahren nach einem der Ansprüche 1 oder 2, **dadurch gekennzeichnet,**
(a) **dass** der erste Schwellenwert (v1) auf einen Geschwindigkeitswert festgelegt ist, bei dem ein Einlegen der Feststellbremse nicht sicherheitskritisch ist; und/oder
(b) **dass** der erste Schwellenwert (v1) auf einen Wert aus dem Bereich von 0 km/h bis 10 km/h, weiter vorzugsweise auf einen Wert aus dem Bereich von 0 km/h bis 7 km/h festgelegt ist.

4. Verfahren nach einem der vorhergehenden Ansprüche, **dadurch gekennzeichnet,**
(a) **dass** der zweite Schwellenwert auf den gleichen Wert wie der erste Schwellenwert (v1) festgelegt ist; und/oder
(b) **dass** der zweite Schwellenwert auf einen Geschwindigkeitswert festgelegt ist, bei dem ein Einlegen der Feststellbremse (4) nicht sicherheitskritisch ist.

5. Verfahren nach einem der vorhergehenden Ansprüche, **dadurch gekennzeichnet, dass** die Bremsanforderung an die Betriebsbremse (5) einer Bremsbeschleunigung von höchstens 4 m/s^2 entspricht.

6. Vorrichtung (2a, 3a) zur Steuerung einer elektrischen Feststellbremsvorrichtung (4) und zur Steuerung einer Trennvorrichtung (3) zum Trennen eines elektrischen Spannungsversorgers vom Bordnetz infolge einer Betätigung eines handbetätigten Not-Aus-Betätigungselements (2) eines Kraftfahrzeugs, insbesondere eines Nutzfahrzeugs, wobei die Vorrichtung (2a, 3a) eingerichtet ist:
(a) eine Betätigungssignal des handbetätigten Not-Aus-Betätigungselements (2) zu empfangen;
(b) ein zweites Signal zu empfangen, aus dem die Fahrzeuggeschwindigkeit oder ein Bewegungszustand des Kraftfahrzeugs ableitbar ist;
(c) in Abhängigkeit von dem Betätigungssignal eine Betätigung des Not-Aus-Betätigungselements (2) zu erkennen und bei einer erkannten Betätigung des Not-Aus-Betätigungselements (2) in Abhängigkeit von dem zweiten Signal zu prüfen, ob eine Fahrzeuggeschwindigkeit des Kraftfahrzeugs nicht größer als ein vorbestimmter erster Schwellenwert (v1) ist; und
(d) falls die Fahrzeuggeschwindigkeit des Kraftfahrzeugs nicht größer als der vorbestimmte erste Schwellenwert (v1) ist:
(d1) ein Steuersignal zum Einlegen der Feststellbremsvorrichtung (4) zu senden und
(d2) eine Verzögerungszeit der Trennvorrichtung (3) auf einen ersten Wert einzustellen, und
(e) falls die Fahrzeuggeschwindigkeit des Kraftfahrzeugs größer als der vorbestimmte Schwellenwert (v1) ist:
(e1) die Verzögerungszeit der Trennvorrichtung (3) auf einen zweiten Wert, der größer als der erste Wert ist, einzustellen,
(e2) eine Bremsanforderung an die elektrische Betriebsbremse (5) zu senden und
(e3) ein Steuersignal zum Einlegen der Feststellbremsvorrichtung (4) zu senden, sobald eine Geschwindigkeit des Kraftfahrzeugs kleiner gleich einem vorbestimmten zweiten Schwellenwert ist.

7. Vorrichtung nach Anspruch 6, **dadurch gekennzeichnet,**
(a) **dass** die Vorrichtung eine in das handbetätigte Not-Aus-Betätigungselement (2) integrierte Steuerung (2a) ist; oder
(b) **dass** die Vorrichtung eine in die Trennvorrichtung (3) integrierte Steuerung (3a) ist.

8. Nutzfahrzeug, **gekennzeichnet durch** eine Vorrichtung nach Anspruch 6 oder 7; eine elektrische Feststellbremseinrichtung (4), eine elektrische Betriebsbremse (5); ein handbetätigtes Not-Aus-Betätigungselement (2) im Fahrerhaus; und eine Trennvorrichtung (3) zum Trennen eines elektrischen Spannungsversorgers vom Bordnetz infolge einer Betätigung eines handbetätigten Not-Aus-Betätigungselements (2).

9. Nutzfahrzeug nach Anspruch 8, **dadurch gekennzeichnet, dass** die elektrische Feststellbremseinrichtung (4) wenigstens einen Federspeicherbremszylinder und eine elektropneumatisch steuerbare Feststellbremsventilanordnung umfasst, über die der wenigstens eine Federspeicherbremszylinder belüftbar und entlüftbar ist.

## Claims

1. Method for applying an electric parking brake apparatus (4) of a motor vehicle, in particular a commercial vehicle, having a manually operated emergency shut-off operating element (2) and a disconnection apparatus (3) for disconnecting an electrical voltage supply means from the on-board electrical system as a result of operation of the emergency shut-off operating element (2), comprising the steps of:
(a) when a speed of the motor vehicle is not greater than a predetermined first threshold value (v1) when the emergency shut-off operating element is operated:
(a1) applying the electric parking brake (4), and
(a2) setting a delay time of the disconnection apparatus to a first value; and
(b) when the speed of the motor vehicle is greater than the predetermined first threshold value (v1) when the emergency shut-off operating element (2) is operated:
(b1) setting the delay time of the disconnection apparatus (3) to a second value which is greater than the first value,
(b2) transmitting a braking request to the electric service brake (5), and
(b3) applying the electric parking brake (4) as soon as a speed of the motor vehicle is less than or equal to a predetermined second threshold value.

2. Method according to Claim 1, **characterized in that** the first value of the delay time corresponds to a minimum settable delay time (T_{Min}) of the disconnection apparatus (3), and/or **in that** the second value of the delay time corresponds to a maximum settable delay time (T_{Max}) of the disconnection apparatus (3).

3. Method according to either of Claims 1 and 2, **characterized**
(a) **in that** the first threshold value (v1) is fixed at a speed value at which application of the parking brake is not safety-critical; and/or
(b) **in that** the first threshold value (v1) is fixed at a value in the range of from 0 km/h to 10 km/h, further preferably at a value in the range of from 0 km/h to 7 km/h.

4. Method according to one of the preceding claims, **characterized**
(a) **in that** the second threshold value is fixed at the same value as the first threshold value (v1); and/or
(b) **in that** the second threshold value is fixed at a speed value at which application of the parking brake (4) is not safety-critical.

5. Method according to one of the preceding claims, **characterized in that** the braking request to the service brake (5) corresponds to a braking acceleration of at most 4 m/s^2.

6. Apparatus (2a, 3a) for controlling an electric parking brake apparatus (4) and for controlling a disconnection apparatus (3) for disconnecting an electrical voltage supply means from the on-board electrical system as a result of operation of a manually operated emergency shut-off operating element (2) of a motor vehicle, in particular a commercial vehicle, wherein the apparatus (2a, 3a) is designed:
(a) to receive an operating signal from the manually operated emergency shut-off operating element (2);
(b) to receive a second signal from which the vehicle speed or a movement state of the motor vehicle can be derived;
(c) to identify operation of the emergency shut-off operating element (2) depending on the operating signal, and, when operation of the emergency shut-off operating element (2) is identified, to check depending on the second signal whether a vehicle speed of the motor vehicle is not greater than a predetermined first threshold value (v1); and
(d) if the vehicle speed of the motor vehicle is not greater than the predetermined first threshold value (v1):
(d1) to send a control signal for applying the parking brake apparatus (4), and
(d2) to set a delay time of the disconnection apparatus (3) to a first value, and
(e) if the vehicle speed of the motor vehicle is greater than the predetermined threshold value (v1):
(e1) to set the delay time of the disconnection apparatus (3) to a second value which is greater than the first value,
(e2) to send a braking request to the electric service brake (5), and
(e3) to send a control signal for applying the service brake apparatus (4) as soon as a speed of the motor vehicle is less than or equal to a predetermined second threshold value.

7. Apparatus according to Claim 6, **characterized**
(a) **in that** the apparatus is a controller (2a) which is integrated into the manually operated emergency shut-off operating element (2); or
(b) **in that** the apparatus is a controller (3a) which is integrated into the disconnection apparatus (3).

8. Commercial vehicle, **characterized by** an apparatus according to Claim 6 or 7; an electric parking brake device (4), an electric service brake (5); a manually operated emergency shut-off operating element (2) in the driver's cab, and a disconnection apparatus (3) for disconnecting an electrical voltage supply means from the on-board electrical system as a result of operation of a manually operated emergency shut-off operating element (2).

9. Commercial vehicle according to Claim 8, **characterized in that** the electric parking brake device (4) comprises at least one spring accumulator brake cylinder and one parking brake valve arrangement which can be electropneumatically controlled and by means of which air can be admitted to the at least one spring accumulator brake cylinder and the at least one spring accumulator brake cylinder can be vented.

## Revendications

1. Procédé d'insertion d'un dispositif de frein de stationnement électrique (4) d'un véhicule à moteur, en particulier d'un véhicule utilitaire, doté d'un organe de commande d'arrêt d'urgence (2) à commande manuelle et d'un dispositif séparateur (3) destiné à séparer une alimentation en tension électrique du réseau de bord à la suite d'un actionnement de l'organe de commande d'arrêt d'urgence (2), comprenant les étapes :
(a) si une vitesse du véhicule lors de l'actionnement de l'organe de commande d'arrêt d'urgence n'est pas supérieure à une première valeur seuil (v1) prédéfinie, alors :
(a1) insertion du frein de stationnement électrique (4) et
(a2) réglage d'un délai de temporisation du dispositif séparateur sur une première valeur ; et
(b) si la vitesse du véhicule lors de l'actionnement de l'organe de commande d'arrêt d'urgence (2) est supérieure à la première valeur seuil (v1) prédéfinie, alors :
(b1) réglage du délai de temporisation du dispositif séparateur (3) sur une deuxième valeur supérieure à la première valeur,
(b2) transmission d'une demande de freinage au frein de service électrique (5) et
(b3) insertion du frein de stationnement électrique (4), dès qu'une vitesse du véhicule à moteur est inférieure ou égale à une deuxième valeur seuil prédéterminée.

2. Procédé selon la revendication 1, **caractérisé en ce que** la première valeur du délai de temporisation correspond à un délai de temporisation minimal réglable (T_{Min}) du dispositif séparateur (3) et/ou **en ce que** la deuxième valeur du délai de temporisation correspond à un délai de temporisation maximal réglable (T_{Max}) du dispositif séparateur (3).

3. Procédé selon l'une des revendications 1 et 2, **caractérisé en ce que**
(a) la première valeur seuil (v1) est fixée sur une valeur de vitesse, pour laquelle une insertion du frein de stationnement n'est pas critique ; et/ou
(b) la première valeur seuil (v1) est fixée sur une valeur dans une plage de 0 km/h à 10 km/h, de préférence sur une valeur dans une plage de 0 km/h à 7 km/h.

4. Procédé selon l'une des revendications précédentes, **caractérisé en ce que**
(a) la deuxième valeur seuil est fixée sur la même valeur que la première valeur seuil (v1) ; et/ou
(b) la deuxième valeur seuil est fixée sur une valeur de vitesse, pour laquelle une insertion du frein de stationnement (4) n'est pas critique.

5. Procédé selon l'une des revendications précédentes, **caractérisé en ce que** la demande de freinage sur le frein de service (5) correspond à une accélération de freinage de 4 m/s² au maximum.

6. Dispositif (2a, 3a) de commande d'un dispositif de frein de stationnement électrique (4) et de commande d'un dispositif séparateur (3) destiné à séparer une alimentation en tension électrique du réseau de bord à la suite d'un actionnement d'un organe de commande d'arrêt d'urgence (2) à commande manuelle d'un véhicule à moteur, en particulier un véhicule utilitaire, dans lequel le dispositif (2a, 3a) est disposé pour :
(a) recevoir un signal d'actionnement de l'organe de commande d'arrêt d'urgence (2) à commande manuelle ;
(b) recevoir un deuxième signal, duquel peuvent être déduits la vitesse du véhicule ou un état de mouvement du véhicule à moteur ;
(c) reconnaître l'actionnement de l'organe de commande d'arrêt d'urgence (2) en fonction du signal d'actionnement et vérifier, lors d'un actionnement reconnu de l'organe de commande d'arrêt d'urgence (2), en fonction du deuxième signal si une vitesse de véhicule du véhicule à moteur n'est pas supérieure à la première valeur seuil prédéterminée (v1) ; et
(d) si une vitesse de véhicule du véhicule à moteur n'est pas supérieure à la première valeur seuil prédéterminée (v1) :
(d1) envoyer un signal de commande pour insérer le dispositif de frein de stationnement (4) et
(d2) régler un délai de temporisation du dispositif séparateur (3) sur une première valeur, et
(e) si la vitesse de véhicule du véhicule à moteur est supérieure à la valeur seuil prédéterminée (v1) :
(e1) régler le délai de temporisation du dispositif séparateur (3) sur une deuxième valeur supérieure à la première valeur,
(e2) envoyer une demande de freinage au frein de service électrique (5) et
(e3) envoyer un signal de commande pour insérer le dispositif de frein de stationnement électrique (4), dès qu'une vitesse du véhicule à moteur est inférieure ou égale à une deuxième valeur seuil prédéterminée.

7. Dispositif selon la revendication 6, **caractérisé en ce que**
(a) le dispositif est une commande (2a) intégrée dans l'organe de commande d'arrêt d'urgence (2) à commande manuelle ; ou
(b) le dispositif est une commande (3a) intégrée dans le dispositif séparateur (3).

8. Véhicule utilitaire, **caractérisé par** un dispositif selon la revendication 6 ou 7 ; un moyen de frein de stationnement électrique (4), un frein de service électrique (5) ; un organe de commande d'arrêt d'urgence (2) à commande manuelle dans la cabine ; et dispositif séparateur (3) destiné à séparer une alimentation en tension électrique du réseau de bord à la suite d'un actionnement de l'organe de commande d'arrêt d'urgence (2) à commande manuelle.

9. Véhicule utilitaire selon la revendication 8, **caractérisé en ce que** le moyen de frein de stationnement électrique (4) comprend au moins un cylindre de frein à ressort accumulateur et un système de soupapes de frein de stationnement commandable, au moyen duquel l'au moins un cylindre de frein à ressort accumulateur est ventilable et évacuable.
